# EUROPÄISCHE PATENTSCHRIFT

(11) **EP 2 523 282 B1**
(45) Veröffentlichungstag und Bekanntmachung des Hinweises auf die Patenterteilung: **27.02.2019**
(21) Anmeldenummer: 12002369.2
(22) Anmeldetag: 30.03.2012
(51) Int. Cl.: H02G 3/12, H02J 7/00, H04M 1/04, H04W 88/00

(54) **Zentralscheibe eines elektrischen Installationsgerätes zum Ablegen und elektrischen Aufladen eines mobilen Audio- und Kommunikationsgerätes**
Central disc of an electric installation device for depositing and electrically charging a mobile audio and communication device
Disque central d'un appareil d'installation électrique destiné au dépôt et au chargement électrique d'un appareil de communication audio mobile

(30) Priorität: 13.05.2011 DE 102011101594
(43) Veröffentlichungstag der Anmeldung: 14.11.2012
(73) Patentinhaber: ABB AG, 68309 Mannheim (DE)
(72) Erfinder: Gerrath, Volker, 58791 Werdohl-Eveking (DE); Diehl, Sven, 57078 Siegen (DE); Waibel, Florian, 44797 Bochum (DE); Ewers, Manfred, 58239 Schwerte (DE)

(56) Entgegenhaltungen:
- WO-A1-2011/034441
- DE-A1- 1 615 805
- DE-A1- 2 120 521
- DE-A1- 2 518 342
- DE-A1- 19 514 605
- DE-A1-102009 019 264
- DE-A1-102012 000 380
- DE-U1-202008 006 884
- US-A1- 2002 043 960

## Beschreibung

Die Erfindung betrifft eine Zentralscheibe eines elektrischen Installationsgerätes zum Ablegen und elektrischen Aufladen eines mobilen Audio- und Kommunikationsgerätes, insbesondere Mobiltelefons, wobei ein Deckel über ein Scharniergelenk an einer Basisplatte der Zentralscheibe befestigt ist und wobei eine Auflagefläche zum Ablegen des mobilen Audio- und Kommunikationsgerätes durch zwei beidseitig des Deckels befindliche Seitenplatten vergrößert ist.

Aus der DE 10 2009 021 449 A1 ist ein elektrisches Installationsgerät mit einem in Form eines Unterputz-Gerätes ausgebildeten und in eine handelsübliche Unterputzdose montierbaren Gerätesockel bekannt, welcher ein Ladegerät und einen elektrischen Anschluss für ein Wechselspannungsnetz aufweist, wobei frontseitig des Gerätesockels ein Ladeanschlussstecker für den Anschluss eines Mobiltelefons und ein Universalhalter für die Ablage/Halterung dieses Mobiltelefons vorgesehen ist. Der Universalhalter ist in Form einer um ungefähr 90° nach unten zu öffnenden, über ein unteres Scharniergelenk an einer Zentralscheibe respektive am Gerätesockel befestigten Klappe ausgebildet, welche eine Auflagefläche zur Ablage des Mobiltelefons bildet. Mit der Klappe ist mindestens eine seitliche, um ungefähr 180° schwenkbare Klappe über ein Scharniergelenk verbunden, um derart eine vergrößerte Auflagefläche zur Ablage des Mobiltelefons zu schaffen.

Aus der DE 10 2012 000 380 A1 ist ein Unterputz-Elektroinstallationsgerät bekannt, welches einen Unterputz- Gerätesockel, eine Zentralscheibe und einen Abdeckrahmen aufweist, wobei die elektrische Verbindung zwischen dem Gerätesockel einerseits und der Zentralscheibe andererseits über eine elektrische Kontaktierungsvorrichtung erfolgt.

Weitere elektrische Unterputzgeräte sind aus der DE 1615805 A1 und DE 2120521 A1 bekannt, die aus einem Abdeckrahmen mit eingesetzter Betätigungswippe eines Schalters sowie einer Frontplatte bzw. Zentralscheibe aufgebaut sind.

Der Erfindung liegt die Aufgabe zugrunde, eine optimierte Zentralscheibe eines elektrischen Installationsgerätes zum Ablegen und elektrischen Aufladen eines mobilen Audio- und Kommunikationsgerätes anzugeben.

Diese Aufgabe wird erfindungsgemäß durch den Gegenstand von Anspruch 1 gelöst. Die abhängigen Ansprüche definieren bevorzugte Ausführungsbeispiele.

Die mit der Erfindung erzielbaren Vorteile bestehen insbesondere darin, dass der Deckel der Zentralscheibe inklusive der beiden Seitenplatten bei Nichtgebrauch vollständig in den durch den Abdeckrahmen vorgegebenen und begrenzten Raum eingeklappt werden kann. Durch das nahezu vollständig bündige Versenken der Funktionskomponenten wird einerseits verhindert, dass Personen beispielsweise durch herausragende Baukomponenten verletzt werden können, andererseits werden die Funktionskomponenten des Installationsgerätes selbst vor Beschädigung geschützt. Vor allem jedoch wird hierdurch eine formschöne Integration der zum Ablegen und elektrischen Aufladen eines mobilen Audio- und Kommunikationsgerätes dienenden Zentralscheibe in ein Installationsgeräte-Programm ermöglicht. Das vorgeschlagene elektrische/elektronische Installationsgerät kann beispielsweise in Mehrfach-Kombination (z. B. 2fach-Kombination, 3fach-Kombination, 4fach-Kombination) zusammen mit Schaltern, Dimmern, Steckdosen usw. eingesetzt werden. Derartige Installationsgeräte-Programme sind in vielfältiger Art mit unterschiedlichem Design, unterschiedlicher Farbgebung und unter Einsatz unterschiedlicher Materialien (z. B. Kunststoff, Edelstahl) verfügbar. Auf die vorgeschlagene Weise wird das vorgeschlagene elektrische/elektronische Unterputz-Installationsgerät harmonisch in ein Unterputz-Programm integriert und stellt keinen "Fremdkörper" im Hinblick auf Steckdosen, Schalter, Dimmer, Tastsensoren, EIB/KONNEX-Geräte der Hauskommunikation, Bewegungsmelder usw. dar.

Selbstverständlich ist es zur Realisierung einer Einzelgeräte-Lösung auch möglich, die Zentralscheibe selbst mit einem (festen) Abdeckrahmen auszurüsten.

In Weiterbildung der Erfindung greifen zur Arretierung/Verriegelung der Seitenplatten federbelastete Sicherungsstifte der Verrastvorrichtung in Sicherungstaschen der Seitenplatten ein. Hierdurch wird ein Schwenken des Deckels zu seiner Basisplatte hin ermöglicht, ohne dass hierbei die Seitenplatten in irgend einer Weise störend wirken könnten.

Zweckmäßig sind die Sicherungsstifte mit Schrägflächen versehen, welche mit Schrägflächen eines Auslösers der Verrastvorrichtung zusammenarbeiten, um derart bei Beaufschlagung des Auslösers ein Herausziehen der Sicherungsstifte aus den Sicherungstaschen und damit ein Entriegeln der Seitenplatten zu bewirken. Somit genügt eine Druckbeaufschlagung des Benutzers, um nachfolgend die gewünschte Vergrößerung der Auflagefläche zum Ablegen des mobilen Audio- und Kommunikationsgerätes zu schaffen.

Vorteilhaft dient eine Feder, vorzugsweise eine Schenkelfeder, zum selbsttätigen Verschieben der Seitenplatten zur Schaffung einer vergrößerten Auflagefläche.

Die Erfindung wird nachstehend an Hand der in der Zeichnung dargestellten Ausführungsbeispiele näher erläutert. Es zeigen:
- Fig. 1: eine perspektivische Sicht auf eine mit einem Abdeckrahmen komplettierte Zentralscheibe eines elektrischen Installationsgerätes zum Ablegen und elektrischen Aufladen eines mobilen Audio- und Kommunikationsgerätes im vollständig aufgeklappten Zustand,
- Fig. 2: eine Ansicht auf die Frontseite einer mit einem Abdeckrahmen komplettierte Zentralscheibe im vollständig aufgeklappten Zustand,
- Fig. 3: eine Ansicht von oben auf eine mit einem Abdeckrahmen komplettierte Zentralscheibe im vollständig aufgeklappten Zustand,
- Fig. 4: eine Ansicht von oben auf eine mit einem Abdeckrahmen komplettierte Zentralscheibe im teilweise aufgeklappten Zustand,
- Fig. 5: eine Ansicht auf die Frontseite einer mit einem Abdeckrahmen komplettierte Zentralscheibe im zusammengeklappten Zustand,
- Fig. 6: eine Ansicht von oben auf eine mit einem Abdeckrahmen komplettierte Zentralscheibe im zusammengeklappten Zustand,
- Fig. 7, 8: Einzelheiten der Verrastvorrichtung für die Seitenplatten.

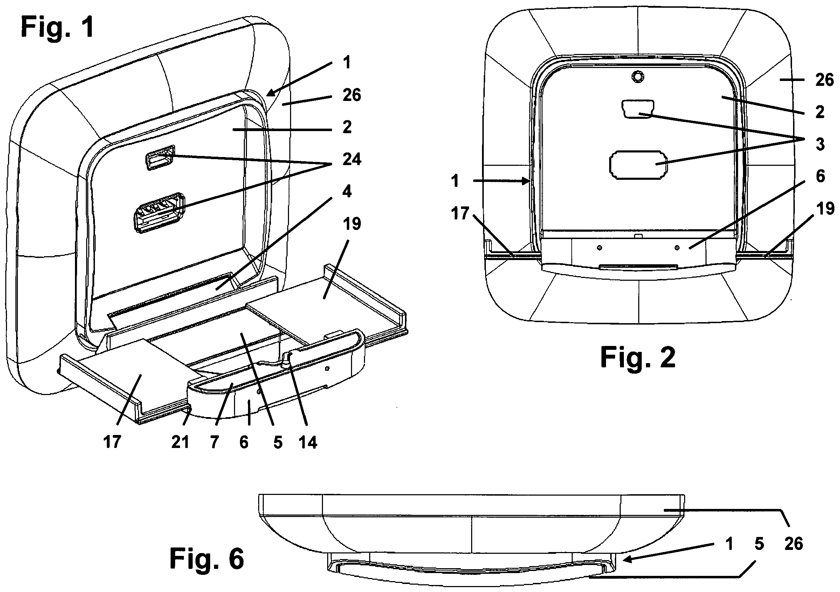

In Fig. 1 ist eine perspektivische Sicht auf eine mit einem Abdeckrahmen komplettierte Zentralscheibe eines elektrischen Installationsgerätes zum Ablegen und elektrischen Aufladen eines mobilen Audio- und Kommunikationsgerätes im vollständig aufgeklappten Zustand dargestellt. Die Zentralscheibe 1 setzt sich aus einer Basisplatte 2 und einem über ein Scharniergelenk 4 daran befestigten, um 90° schwenkbaren Deckel 5 zusammen. Die Basisplatte 2 wird vom Abdeckrahmen 26 umrahmt und ist im montierten Zustand an einem (nicht gezeigten) in einer normgerechten Unterputz-Gerätedose installierbarem Gerätesockel befestigt, welcher ein Ladegerät und einen elektrischen Anschluss für ein Wechselspannungsnetz aufweist. Die Basisplatte 2 weist mindestens eine Ausnehmung auf, durch welche mindestens eine elektrische Anschlussschnittstelle 24 für ein mobiles Audio- und Kommunikationsgerät, z. B. eine Micro-USB-Schnittstelle, zugänglich ist.

Der Deckel 5 weist frontseitig eine Verrastvorrichtung 6 für zwei verschiebbare Seitenplatten 17 und 19 auf, wobei Nut/Feder-Führungen 21 zwischen den Seitenplatten 17, 19 und dem Deckel 5 respektive der Verrastvorrichtung 6 einerseits und Baukomponenten des Scharniergelenks 4 andererseits die präzise Führung und Verschiebung der Seitenplatten 17, 19 ermöglichen. Die Verrastvorrichtung 6 weist einen federbelasteten Auslöser 14 auf und ist mittels einer Abdeckung 7 staubgeschützt abgedeckt. Bei Betätigung des Auslösers 14 werden die verriegelten Seitenplatten 17, 19 zunächst entriegelt und anschließend mittels Federkraft voneinander weggedrückt. Wird kein mobiles Audio- und Kommunikationsgerät aufgeladen, werden beiden Seitenplatten 17, 19 vom Benutzer gegen die Federkraft in Richtung zueinander gedrückt und verrasten selbsttätig, sobald die Ruheposition erreicht ist. Danach kann der Deckel 5 um 90° zur Basisplatte 2 hin geklappt werden.

In Fig. 2 ist eine Ansicht auf die Frontseite einer mit einem Abdeckrahmen komplettierten Zentralscheibe im vollständig aufgeklappten Zustand dargestellt. Zu erkennen sind die Basisplatte 2 der Zentralscheibe 1 mit Ausnehmungen 3 für den Zugang elektrischer Anschlussschnittstellen 24, die Verrastvorrichtung 6 zur Aufnahme der beiden Seitenplatten 17, 19 sowie der Abdeckrahmen 26.

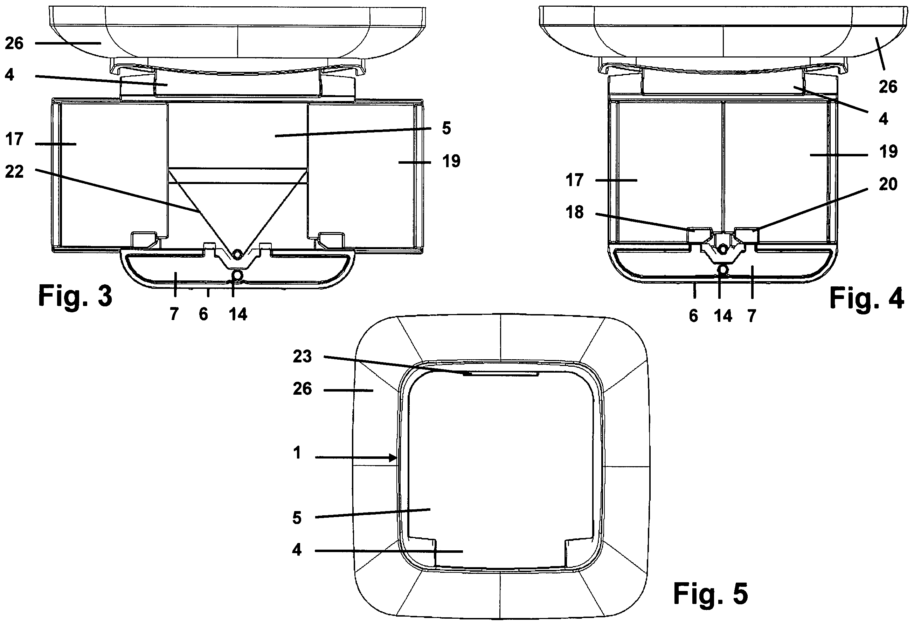

In Fig. 3 ist eine Ansicht von oben auf eine mit einem Abdeckrahmen komplettierte Zentralscheibe im vollständig aufgeklappten Zustand dargestellt. Gut zu erkennen sind außer dem Scharniergelenk 4 und dem Abdeckrahmen 26 der aufgeklappte Deckel 5 mit den beiden, die für ein mobiles Audio- und Kommunikationsgerät verfügbare Ablagefläche vergrößernden Seitenplatten 17, 19 sowie die frontseitige Verrastvorrichtung 6 mit Abdeckung 7 und Auslöser 14. Für das federbelastete Verschieben der Seitenplatten 17, 19 dient eine Feder 22, vorzugsweise eine Schenkelfeder, deren Federkörper-Mitte auf einem Dorn der Verrastvorrichtung 6 gelagert ist und deren Schenkelenden jeweils mit den Seitenplatten 17, 19 verbunden sind.

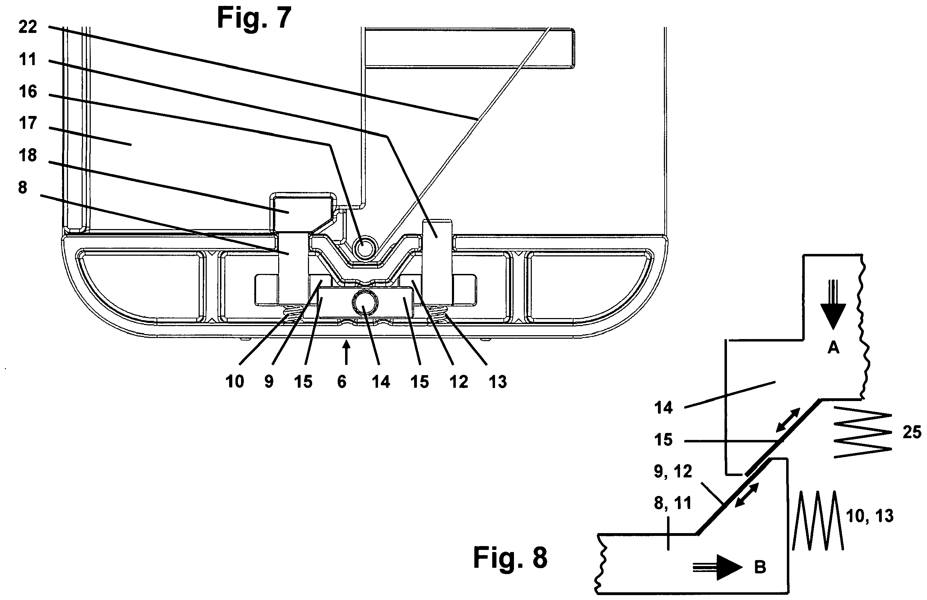

In Fig. 4 ist eine Ansicht von oben auf eine mit einem Abdeckrahmen komplettierte Zentralscheibe im teilweise aufgeklappten Zustand dargestellt. Mit "teilweise aufgeklappt" ist die Position bezeichnet, bei welcher der Deckel 5 um 90° geschwenkt ist und sich die beiden Seitenplatten 17 bzw. 19 im eingeschobenen Zustand über dem Deckel 5 befinden, wobei sie durch in Sicherungstaschen 18 bzw. 20 eingreifende Sicherungsstifte - siehe Ziffern 8 bzw. 11 in Fig. 7 - verriegelt sind. Das Entriegeln dieser Sicherungsstifte erfolgt durch Druck auf den Auslöser 14 der Verrastvorrichtung 6 seitens des Benutzers. Zu erkennen sind des Weiteren die Abdeckung 7, das Scharniergelenk 4 und der Abdeckrahmen 26.

In Fig. 5 ist eine Ansicht auf die Frontseite einer mit einem Abdeckrahmen komplettierten Zentralscheibe im zusammengeklappten Zustand dargestellt. Es ist gut zu erkennen, dass der Deckel 5 der Zentralscheibe 1 vollständig in den vom Abdeckrahmen 26 begrenzten Raum eintaucht. Zum Ausklappen des Deckels 5 greift der Benutzer in eine Einbuchtung 23 an der oberen Kante des Deckels 5, welche dem Scharniergelenk 4 gegenüberliegt.

In Fig. 6 ist eine Ansicht von oben auf eine mit einem Abdeckrahmen komplettierte Zentralscheibe im zusammengeklappten Zustand dargestellt. Die nahezu vollständig bündige Integration des eingeklappten Deckels 5 der Zentralscheibe 1 in den vom Abdeckrahmen 26 begrenzten Raum ist gut zu erkennen.

In den Fig. 7 und 8 sind Einzelheiten der Verrastvorrichtung 6 für die beiden Seitenplatten 17, 19 dargestellt. Insbesondere sind dargestellt:
- zwei Sicherungsstifte 8 bzw. 11, die zum Zwecke des Verriegelns in die Sicherungstaschen 18 bzw. 20 der Seitenplatten 17 bzw. 19 eingreifen, wobei Federn 10 bzw. 13 die Sicherungsstifte 8 bzw. 11 selbsttätig in Richtung dieser Sicherungstaschen 18 bzw. 20 pressen,
- die Feder 22, vorzugsweise Schenkelfeder zum federbelasteten Verschieben der Seitenplatten 17, 19, deren Federkörper-Mitte auf dem Dorn 16 der Verrastvorrichtung 6 gelagert ist und deren Schenkelenden jeweils mit den Seitenplatten 17, 19 verbunden sind,
- der Auslöser 14, welcher Schrägflächen 15 aufweist, welche mit Schrägflächen 9 bzw. 12 der Sicherungsstifte 8 bzw. 11 zusammenarbeiten.

Fig. 8 zeigt das Zusammenwirken der Schrägflächen 15 mit den Schrägflächen 9, 12 im Detail: Sobald der Benutzer auf den Auslöser 14 gegen die Federkraft einer Feder 25 drückt - siehe Pfeil A - werden durch Aneinandergleiten der Schrägflächen 15 des Auslösers 14 und der Schrägflächen 9, 12 der Sicherungsstifte 8, 11 diese Sicherungsstifte 8, 11 gegen die Federkraft der Federn 10, 13 aus den Sicherungstaschen 18, 20 der Seitenplatten 17, 19 gezogen - siehe Pfeil B - was das Entriegeln der Seitenplatten 17, 19 bewirkt, wonach mittels Federkraft der Feder 22, vorzugsweise Schenkelfeder, die beiden Seitenplatten 17, 19 selbsttätig bis in ihre Endposition geschoben werden.

Nun kann das mobile Audio- und Kommunikationsgerät auf die derart geschaffene Auflagefläche Seitenplatte 17 + Deckel 5 + Seitenplatte 19 gelegt werden. Nach Einstecken des Ladekabels in die elektrische Anschlussschnittstelle 24 erfolgt das Aufladen des Akkumulators des mobilen Audio- und Kommunikationsgeräts. Nach Beendigung des Aufladevorganges und Entfernen des Ladekabels sowie des mobilen Audio- und Kommunikationsgerätes von der Auflagefläche drückt der Benutzer die beiden Seitenplatten 17, 19 gegen die Federkraft der Feder 22, vorzugsweise Schenkelfeder, in Richtung zur Mitte des Deckels 5. Sobald die Sicherungstaschen 18, 20 die Sicherungsstifte 8, 11 passieren, werden Letztere mittels Federkraft der Federn 10, 13 in diese Sicherungstaschen 18, 20 gedrückt, wodurch selbsttätig ein ArretierenΛ/errasten der Seitenplatten 17, 19 bewirkt wird. Nun kann der Deckel 5 um 90° in Richtung des Abdeckrahmens 26 geschwenkt werden.

### Bezugszeichenliste

- 1: Zentralscheibe eines elektrischen Installationsgerätes zum Ablegen und elektrischen Aufladen eines mobilen Audio- und Kommunikationsgerätes
- 2: Basisplatte der Zentralscheibe
- 3: Ausnehmung für Anschlussschnittstelle
- 4: Scharniergelenk der Zentralscheibe
- 5: schwenkbarer Deckel der Zentralscheibe
- 6: Verrastvorrichtung für die Seitenplatten
- 7: Abdeckung der Verrastvorrichtung
- 8: erster Sicherungsstift
- 9: Schrägfläche des ersten Sicherungsstiftes
- 10: Feder des ersten Sicherungsstiftes
- 11: zweiter Sicherungsstift
- 12: Schrägfläche des zweiten Sicherungsstiftes
- 13: Feder des zweiten Sicherungsstiftes
- 14: federbelasteter Auslöser
- 15: Schrägfläche des Auslösers
- 16: Dorn
- 17: erste verschiebbare Seitenplatte
- 18: Sicherungstasche der ersten verschiebbaren Seitenplatte
- 19: zweite verschiebbare Seitenplatte
- 20: Sicherungstasche der zweiten verschiebbaren Seitenplatte
- 21: Nut/Feder-Führung zwischen einer Seitenplatte und dem Deckel
- 22: Feder, vorzugsweise Schenkelfeder
- 23: Einbuchtung
- 24: elektrische Anschlussschnittstelle für ein mobiles Audio- und Kommunikationsgerät (Micro-USB-Standard-Schnittstelle)
- 25: Feder des Auslösers
- 26: Abdeckrahmen

## Patentansprüche

1. Zentralscheibe eines elektrischen Unterputz- Installationsgerätes, wobei ein Deckel (5) über ein Scharniergelenk (4) an einer Basisplatte (2) der Zentralscheibe (1) befestigt ist und wobei eine Auflagefläche zum Ablegen eines mobilen Audio- und Kommunikationsgerätes durch zwei beidseitig des Deckels (5) befindliche Seitenplatten (17, 19) vergrößert ist, **dadurch gekennzeichnet, dass** die beiden Seitenplatten (17, 19) verschiebbar am Deckel (5) über Nut-Feder-Führungen (21) geführt und mittels einer Verrastvorrichtung (6) federbelastet in zwei stabilen Endpositionen mit oder ohne vergrößerte Auflagefläche (17, 5, 19) arretierbar sind.

2. Zentralscheibe nach Anspruch 1, **dadurch gekennzeichnet, dass** zur Arretierung der Seitenplatten (17, 19) federbelastete Sicherungsstifte (8, 11) der Verrastvorrichtung (6) in Sicherungstaschen (18, 20) der Seitenplatten (17, 19) eingreifen.

3. Zentralscheibe nach Anspruch 2, **dadurch gekennzeichnet, dass** die Sicherungsstifte (8, 11) mit Schrägflächen (9, 12) versehen sind, welche mit Schrägflächen (15) eines Auslösers (14) der Verrastvorrichtung (6) zusammenarbeiten, um derart bei Beaufschlagung des Auslösers (14) ein Herausziehen der Sicherungsstifte (8, 11) aus den Sicherungstaschen (18, 20) und damit ein Entriegeln der Seitenplatten (17, 19) zu bewirken.

4. Zentralscheibe nach einem der vorstehenden Ansprüche, **dadurch gekennzeichnet, dass** eine Feder (22), vorzugsweise eine Schenkelfeder, zum selbsttätigen Verschieben der Seitenplatten (17, 19) zur Schaffung einer vergrößerten Auflagefläche dient.

## Claims

1. Central disc of an electrical flush-mounted installation device, wherein a cover (5) is fastened to a base plate (2) of the central disc (1) via a hinge joint (4) and wherein a support surface for depositing a mobile audio and communication device is enlarged by means of two side plates (17, 19) located on both sides of the cover (5), **characterized in that** the two hide plates (17, 19) are displaceably guided on the cover (5) via tongue-and-groove guides (21) and can be arrested by means of a latching device (6) under spring loading in two stable end positions with or without enlarged support surface (17, 5, 19).

2. Central disc according to Claim 1, **characterized in that**, in order to arrest the side plates (17, 19), spring-loaded securing pins (8, 11) of the latching device (6) engage in securing pockets (18, 20) of the side plates (17, 19) .

3. Central disc according to Claim 2, **characterized in that** the securing pins (8, 11) are provided with oblique surfaces (9, 12) which cooperate with oblique surfaces (15) of a release mechanism (14) of the latching device (6) in order in such a way, upon actuation of the release mechanism (14), to cause the securing pins (8, 11) to be extracted from the securing pockets (18, 20) and thus cause the side plates (17, 19) to be unlocked.

4. Central disc according to one of the preceding claims, **characterized in that** a spring (22), preferably a leg spring, for automatically displacing the side plates (17, 19) serves to create an enlarged support surface.

## Revendications

1. Plaque centrale d'un appareillage d'installation électrique à pose encastrée, un couvercle (5) étant fixé à une plaque de base (2) de la plaque centrale (1) par le biais d'une articulation à charnière (4) et une surface d'appui servant à déposer un appareil audio et de communication mobile étant agrandie par deux plaquettes latérales (17, 19) qui se trouvent des deux côtés du couvercle (5), **caractérisée en ce que** les deux plaquettes latérales (17, 19) sont guidées de manière coulissante au niveau du couvercle (5) par le biais de guides à rainure et languette (21) et peuvent être bloquées au moyen d'un dispositif d'encliquetage (6) sous contrainte de ressort dans deux positions finales stables avec ou sans surface d'appui (17, 5, 19) agrandie.

2. Plaque centrale selon la revendication 1, **caractérisée en ce que** pour le blocage des plaquettes latérales (17, 19), des goupilles de verrouillage (8, 11) chargées par ressort du dispositif d'encliquetage (6) viennent en prise dans des poches de verrouillage (18, 20) des plaquettes latérales (17, 19).

3. Plaque centrale selon la revendication 2, **caractérisée en ce que** les goupilles de verrouillage (8, 11) sont pourvues de surfaces inclinées (9, 12) qui coopèrent avec des surfaces inclinées (15) d'un déclencheur (14) du dispositif d'encliquetage (6) afin de provoquer ainsi, lors de la sollicitation du déclencheur (14), une extraction des goupilles de verrouillage (8, 11) hors des poches de verrouillage (18, 20) et ainsi un déverrouillage des plaquettes latérales (17, 19) .

4. Plaque centrale selon l'une des revendications précédentes, **caractérisée en ce qu'**un ressort (22), de préférence un ressort de flexion, sert au coulissement automatique des plaquettes latérales (17, 19) en vue de produire une surface d'appui agrandie.
